# EUROPEAN PATENT SPECIFICATION

(11) **EP 3 868 967 B1**
(45) Date of publication and mention of the grant of the patent: **18.01.2023**
(21) Application number: 19885640.3
(22) Date of filing: 20.09.2019
(51) Int. Cl.: E04B 1/38, E01D 19/00, E04B 1/58

(54) **ASSEMBLED STRUCTURE SYSTEM AND APPLICATION THEREOF**
ZUSAMMENGESETZTES STRUKTURSYSTEM UND DESSEN VERWENDUNG
SYSTÈME DE STRUCTURE ASSEMBLÉE ET APPLICATION ASSOCIÉE

(30) Priority: 15.11.2018 CN 201811360829
(43) Date of publication of application: 25.08.2021
(73) Proprietor: Jiang, Yucheng, Fujian 361000 (CN)
(72) Inventor: Jiang, Yucheng, Fujian 361000 (CN)
(74) Representative: Petculescu, Ana-Maria
(86) International application number: PCT/CN2019/106844
(87) International publication number: WO 2020/098387

(56) References cited:
- WO-A1-02/101690
- CA-A1- 2 286 745
- CN-A- 101 769 008
- CN-A- 102 829 051
- CN-A- 103 276 793
- CN-A- 105 696 817
- CN-A- 106 894 505
- CN-A- 109 235 661
- CN-U- 206 157 897
- CN-U- 206 245 469
- CN-U- 209 129 165
- DE-C2- 4 143 352
- GB-A- 1 427 213
- GB-A- 1 503 588

## Description

### TECHNICAL FIELD

The present invention relates to an assembled structure system, and more particularly, to an assembled structure system with a built-in cavity configuration and applications thereof.

### BACKGROUND

In prior composite structure systems, prefabricated buildings generally use reinforced concrete members for assembly combination, and generally use sleeve grouting to assemble and then cast in situ. Steel frame structural buildings generally use bolted connection and/or welding, and their process is relatively complicated. The existing three-in-one connector for furniture articles is generally used for a slab-type structure, and bears little force.

Document CA 2.286.745 A1 discloses an assembled structure system according to the features of the preamble of claim 1.

### SUMMARY

In the prior composite structures, the assembly generally has shortcomings such as troublesome mounting and insufficient firmness and so on.

An objective of the present invention is to provide an assembled structure system and applications thereof to simplify assembled structures such as buildings, furniture and the like, so that the assembly is easier and more convenient with higher accuracy and faster speed.

In order the achieve the above objective, the present invention adopts the following technical solutions. An assembled structure system includes a prefabricated member, a fastener and a locking member. The prefabricated member is provided with at least one cavity, and the fastener is assembled in the at least one cavity. At least one fastener is assembled in each cavity. The cavity includes an upper end surface, a lower end surface, a left end surface and a right end surface. The upper end surface is provided with a fastener through hole or a locking member through hole, wherein the fastener passes through the fastener through hole, and the locking member passes the locking member through hole. The left end surface or the right end surface includes a vertical surface perpendicularly connected to the upper end surface and an inclined surface connected to the vertical surface. A connection angle between the vertical surface and the outer side of the inclined surface forms an obtuse angle. The inclined surface of each of the left end surface and the right end surface is connected to the lower end surface. The upper end surface is located at an upper end or a lower end of the vertical surface, or located between the upper end and the lower end of the vertical surface. The fastener includes a fixed surface, two side surfaces and a bottom surface. The fixed surface is provided with at least one locking hole or through hole. The bottom surface is a curved surface, an arc surface, a fold-line surface or a trapezoidal surface. The total width of the bottom surface is greater than or equal to the width of the fixed surface and greater than or equal to the width of the lower end surface. Optionally, the bottom surface is formed by two inclined bottom surfaces that are folded inwardly. The total width of the two inclined bottom surfaces is greater than or equal to the width of the fixed surface and greater than or equal to the width of the lower end surface. The height of the fastener is higher than the height of the inclined surface. The fastener has a flexibleness in connection portions between the fixed surface and the two side surfaces, connection portions between the two side surfaces and the bottom surface, and a connection portion between the bottom surfaces. Optionally, the fixed surface and the two side surfaces are hingedly connected, the two side surfaces and the bottom surface are hingedly connected, and the bottom surfaces are hingedly connected.

Preferably, the connection angle between the vertical surface and the outer side of the inclined surface is 120°-175°.

Further, a block is disposed above the bottom surface.

Further, a fixed member is disposed under the fixed surface, and the fixed member is provided with at least one threaded hole. The threaded hole is located under and corresponds to the locking hole or through hole.

Further, the fixed member is an angle connector, and each of both end surfaces of the angle connector is provided with the at least one threaded hole.

Further, the locking member is a bolt or a screw.

Further, the left end surface and the right end surface are symmetrical to each other, and the two side surfaces of the fastener are symmetrical to each other.

Further, the two inclined bottom surfaces are separated from or connected to each other.

In another aspect of the present invention, an application of the assembled structure system in a profile is provided.

Further, the profile is applied to a furniture or industrial frameworks.

Further, the furniture includes a cabinet, a wardrobe, a bookcase, a locker, a clapboard, a guardrail, a table, a chair, a door or a window.

In yet another aspect of the present invention, an application of the assembled structure system in a building or an appendage construction of the building is provided.

Further, the building or the appendage of the building includes a column, a beam, a shear wall, an external wall panel, an internal wall panel, a floor slab, a stair, a balcony slab, a bridge or a bridge pier.

Further, a channel steel or a channel steel framework is disposed in the prefabricated member, and the cavity is located in the channel steel or connected to the channel steel framework.

Further, a locking member mounting preformed hole or a fastener mounting preformed hole is disposed at the outer side of the cavity of the prefabricated member.

Further, the column is a wing-shaped column, and the beam is a wing-shaped beam.

After employing the above technical solutions, the present invention has the following advantageous effect. The assembled structure system of the present invention has advantages that the assembly is easy, convenient, fast and firm, and has high accuracy.

### BRIEF DESCRIPTION OF THE DRAWINGS

FIG. 1 is a first cross-sectional schematic diagram of an assembled structure system according to the present invention;
FIG. 2 is a second cross-sectional schematic diagram of the assembled structure system according to the present invention;
FIG. 3 is a third cross-sectional schematic diagram of the assembled structure system according to the present invention;
FIG. 4 is a first structural schematic diagram of a fastener according to the present invention;
FIG. 5 is a second structural schematic diagram of the fastener according to the present invention;
FIG. 6 is a third structural schematic diagram of the fastener according to the present invention;
FIG. 7 is a fourth structural schematic diagram of the fastener according to the present invention;
FIG. 8 is a fifth structural schematic diagram of the fastener according to the present invention;
FIG. 9 is a first structural schematic diagram of a cavity according to the present invention;
FIG. 10 is a second structural schematic diagram of the cavity according to the present invention;
FIG. 11 is a third structural schematic diagram of the cavity according to the present invention;
FIG. 12 is a schematic diagram of an assembling application of the assembled structure system according to the present invention;
FIG. 13 is a schematic diagram of connection and fitting of the fastener according to the present invention;
FIG. 14 is a first schematic diagram of an application of the cavity on a profile according to the present invention;
FIG. 15 is a second schematic diagram of the application of the cavity on the profile according to the present invention;
FIG. 16 is a third schematic diagram of the application of the cavity on the profile according to the present invention;
FIG. 17 is a structural schematic diagram of a wing-shaped beam with the cavity according to the present invention;
FIG. 18 is a structural schematic diagram of a wing-shaped column with the cavity according to the present invention;
FIG. 19 is a structural schematic diagram of a wall with the cavity according to the present invention;
FIG. 20 is a structural schematic diagram of a floor slab with the cavity according to the present invention;
FIG. 21 is a schematic diagram of assembly of an in-situ casting beam-column joint; and
FIG. 22 is a schematic diagram of connection of a steel structure framework with a built-in cavity configuration according to the present invention.

Reference Number of Main Components:
1. fastener, 11. fixed surface, 111. through hole or locking hole, 12. bottom surface, 13. left side surface, 14. right side surface, 15. block, 2. cavity, 21. upper end surface, 211. locking member through hole, 212. locking member mounting preformed hole or fastener mounting preformed hole, 213. fastener through hole, 22. lower end surface, 23. left end surface, 231. vertical surface, 232. inclined surface, 24. right end surface, 3. locking member, 30. wing-shaped beam, 31. wing-shaped column, 32. prefabricated wall, 33. prefabricated floor slab, 34. in-situ casting beam-column joint, 35. steel structure framework, 351. steel plate, 4. prefabricated member, 5. profile, 51. fixed member, 511. threaded hole.

### DETAILED DESCRIPTION OF THE EMBODIMENTS

In order to make objectives, technical solutions and advantages of the present invention clearer, the present invention will be further explained in detail in conjunction with the figures and the exemplary embodiments.

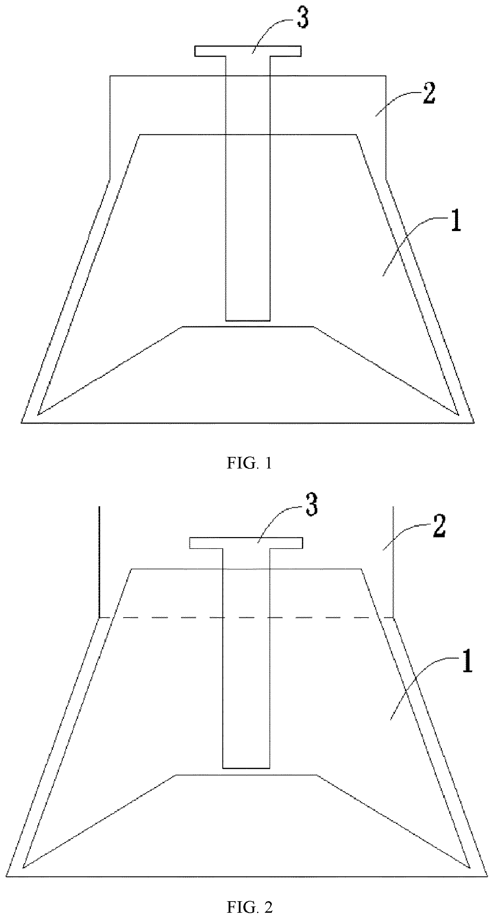

As shown in FIGS. 1-3, an assembled structure system of the present invention includes the cavity 2 in the prefabricated member 4, the fastener 1 and the locking member 3. The fastener 1 is mounted in the cavity 2. The cavity 2 includes the upper end surface 21, the lower end surface 22, the left end surface 23 and the right end surface 24. The upper end surface 21 is provided with the fastener through hole 213 through which the fastener 1 passes, or the locking member through hole 211 through which the locking member 3 passes. The fastener 1 is inserted into the cavity 2 from the left end or the right end of the cavity 2, or placed into the cavity 2 from the fastener through hole 213 of the upper end surface 21 of the cavity 2. The locking member 3 passes through the locking member through hole 211 or the fastener through hole 213 on the cavity 2, is locked into the locking hole 111 in the fastener 1, and presses on the bottom surface 12, so that the bottom surface 12 expands towards two sides and drives two side surfaces to expand outwardly. When a bottom corner of the fastener 1 reaches a connection portion between the inclined surface 232 and the lower end surface 22 of the cavity 2, a position in each of both side surfaces of the fastener 1 exactly abuts against a connection portion between the vertical surface 231 and the inclined surface 232 of the cavity 2, so that the fastener 1 is tightly attached to the lower end side (inclined surface 232) of the cavity 2.

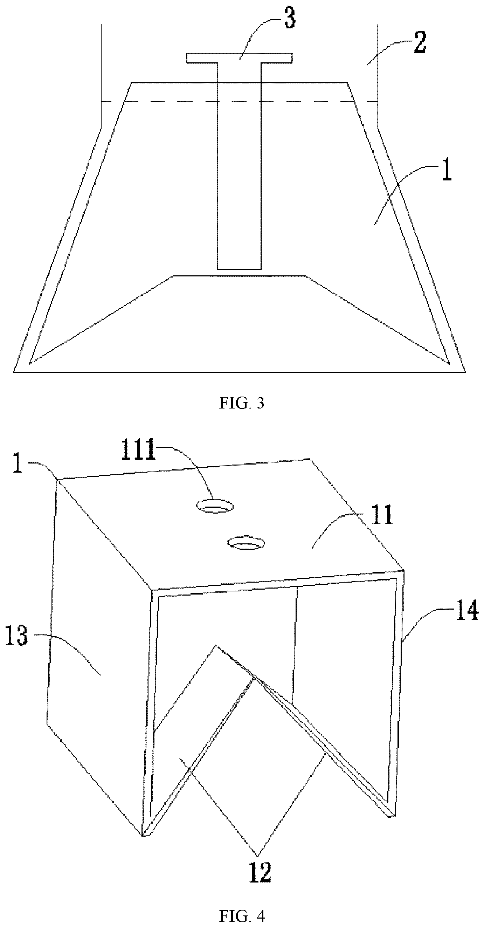

As shown in FIG. 4, the fastener 1 includes the fixed surface 11, two side surfaces and the bottom surface 12. The fixed surface 11, the two side surfaces and the bottom surface 12 are hingedly connected. Optionally, there is flexibleness in connection portions between the fixed surface 11 and the two side surfaces, connection portions between the two side surfaces and the bottom surface 12, and a connection portion between the bottom surfaces. The fixed surface 11 is provided with at least one through hole or locking hole 111. The bottom surface 12 is configured as two inclined bottom surfaces, and the two inclined bottom surfaces may be separated from or connected to each other. The two inclined bottom surfaces are connected to the two side surfaces, and the total width of the two inclined bottom surfaces is greater than or equal to the width of the fixed surface 11.

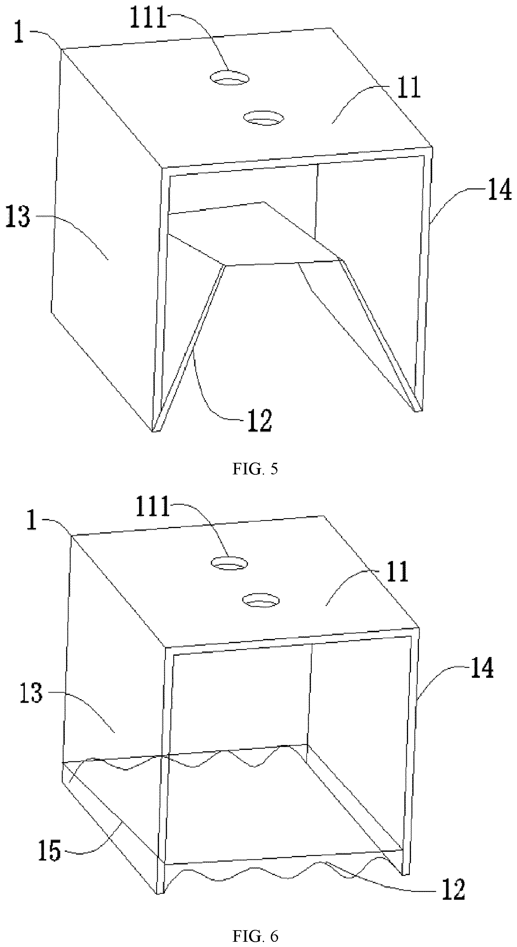

As shown in FIG. 5, based upon FIG. 4, the bottom surface 12 of the fastener 1 is in a trapezoidal structure, and the total width of the trapezoidal structure is greater than or equal to the width of the fixed surface 11.

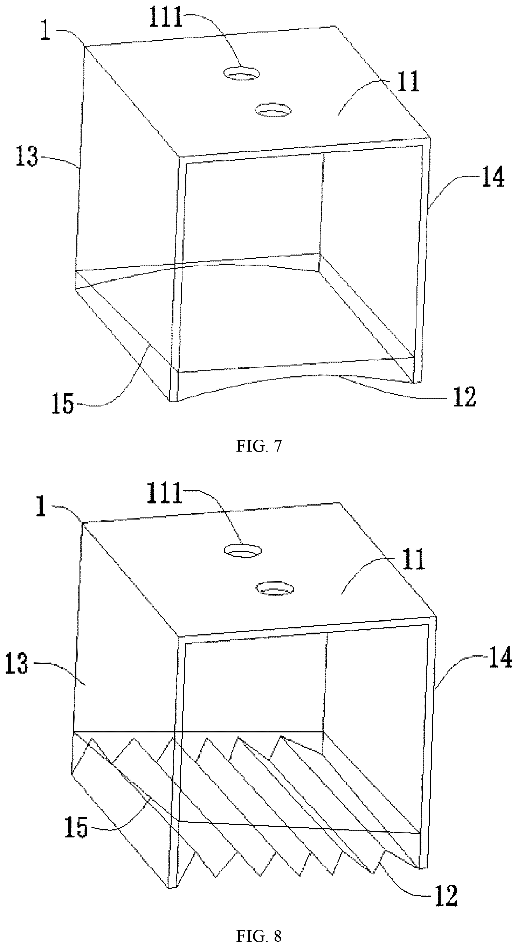

As shown in FIGS. 6-8, based upon FIG. 4, the bottom surface 12 of the fastener 1 may be in a curved surface, an arc surface and a fold-line surface. The total width of each of the curved surface, the arc surface and the fold-line surface is greater than or equal to the width of the corresponding fixed surface 11. The block 15 is disposed on the curved surface, the arc surface and the fold-line surface, and the block 15 is configured to enable the stress on the bottom surface to be more uniform.

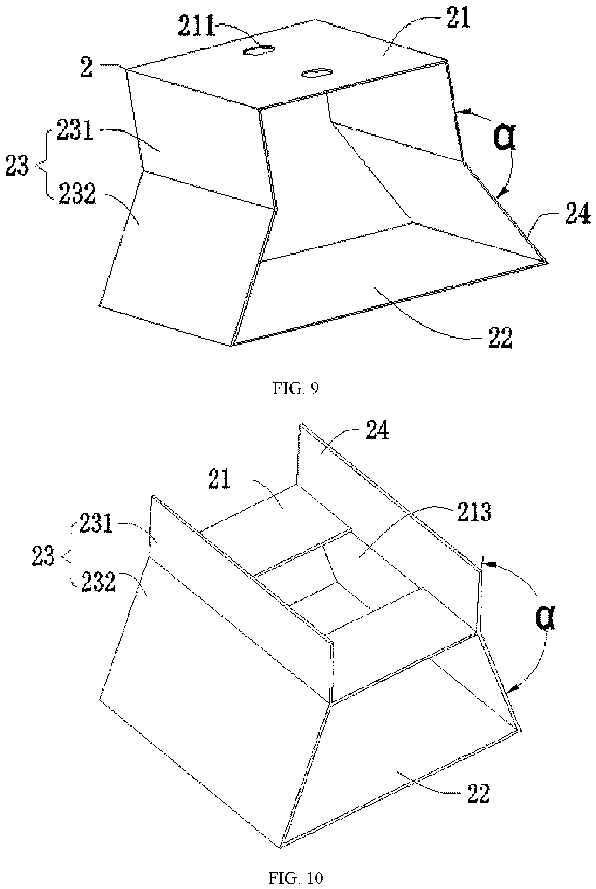

As shown in FIGS. 9-11, the cavity 2 includes the upper end surface 21, the lower end surface 22, the left end surface 23 and the right end surface 24. The left end surface 23 and the right end surface 24 are symmetrical to each other. Each of the left end surface 23 and the right end surface 24 includes the vertical surface 231 perpendicularly connected to the upper end surface 21, and the inclined surface 232 connected to the vertical surface 231. A connection angle between the vertical surface 231 and the outer side of the inclined surface 232 forms an obtuse angle α, and preferably, α is 120°-175°. The inclined surface 232 of each of the left end surface 23 and the right end surface 24 is connected to the lower end surface 22. The upper end surface 21 is connected to the vertical surface 231 of each of the left end surface 23 and the right end surface 24. The upper end surface 21 is located at the upper end or the lower end of the vertical surface 231, or located between the upper end and the lower end of the vertical surface 231. When the height of the upper end surface 21 is higher than the fastener 1, the upper end surface 21 may be provided with the locking member through hole 211 or the fastener through hole 213. When the height of the upper end surface 21 is lower than the fastener 1, the upper end surface 21 is provided with the fastener through hole 213, through which the fastener 1 passes.

The assembled structure system of the present invention can be applied on the profile 5 or constructions of buildings and appendages thereof. The profile 5 includes applications in furniture, industrial frameworks and the like. The constructions of the buildings and appendages thereof include columns, beams, shear walls, external wall panels, internal wall panels, floor slabs, stairs, balcony slabs, bridges and bridge piers. The applications in the furniture include cabinets, wardrobes, bookcases, lockers, guardrails, tables, chairs, doors, windows and the like. The profile 5 is preferably an aluminum alloy profile.

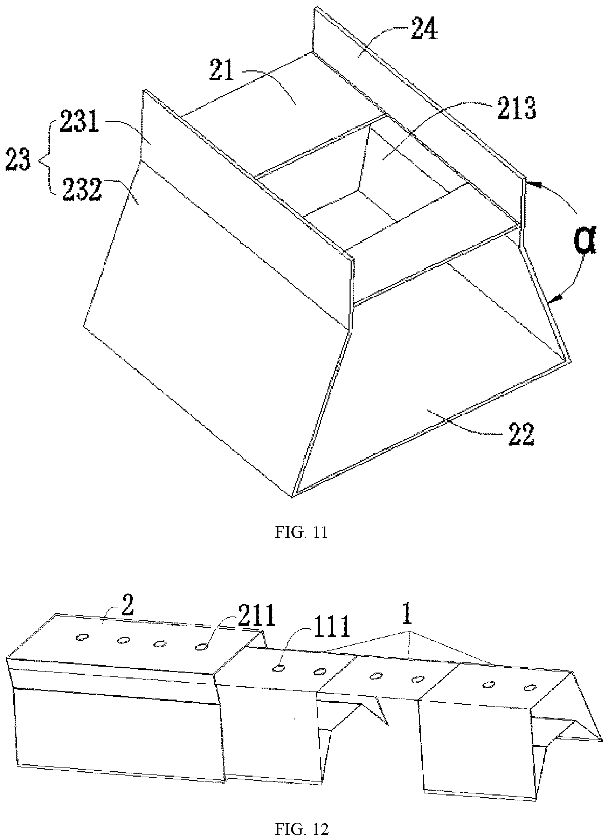

As shown in FIG. 12, the fastener 1 can be application of a plurality of integrated fasteners that are staggered and connected in the cavity 2. A connected fixed surface at a staggered portion of the fastener 1 is further provided with at least one through hole or threaded hole through which a bolt passes and a matching bolt, and is connected to the lower end surface 22 of the cavity 2 for reinforcement.

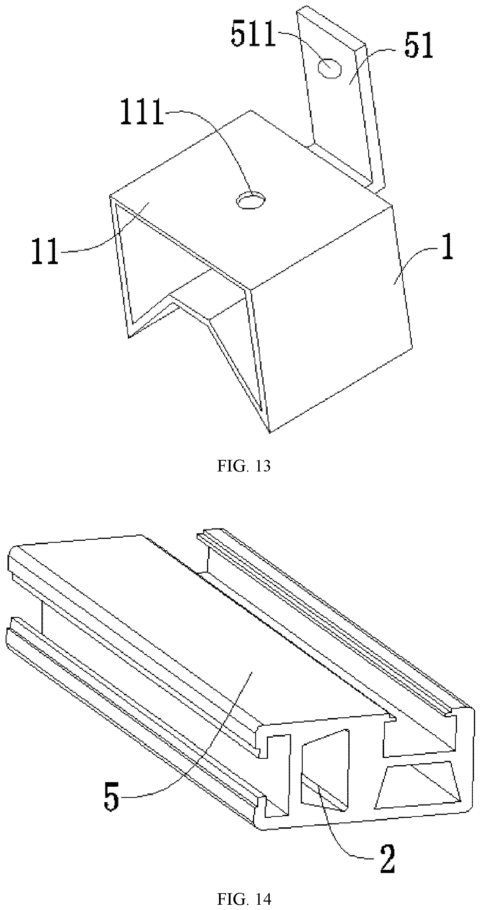

As shown in FIG. 13, the fixed member 51 is further disposed at the lower end of the fixed surface 11 of the fastener 1, and the fixed member 51 is an angle connector. Both ends of the angle connector are provided with at least one threaded hole 511, and the threaded hole 511 is located under and corresponds to the locking hole or through hole 111. The angle connector preferably defines a right angle, and the connector formed by the fastener 1 and the fixed member 51 is configured to perform the assembling connection of various angles of the members, profiles or other fittings, as desirable.

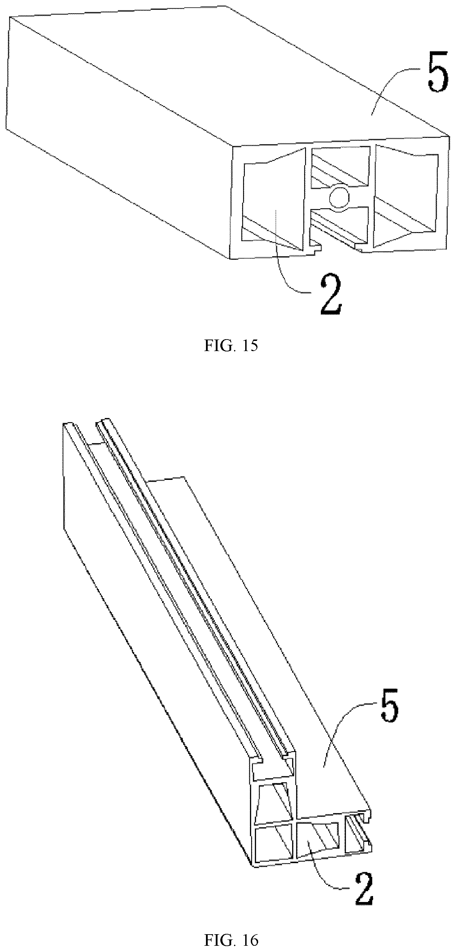

As shown in FIGS. 14-16, the profile 5 is provided with the cavity 2. The profile 5 is preferably an aluminum alloy profile, and is used as a structure in the furniture or industries for transversely or longitudinally assembling a corresponding framework.

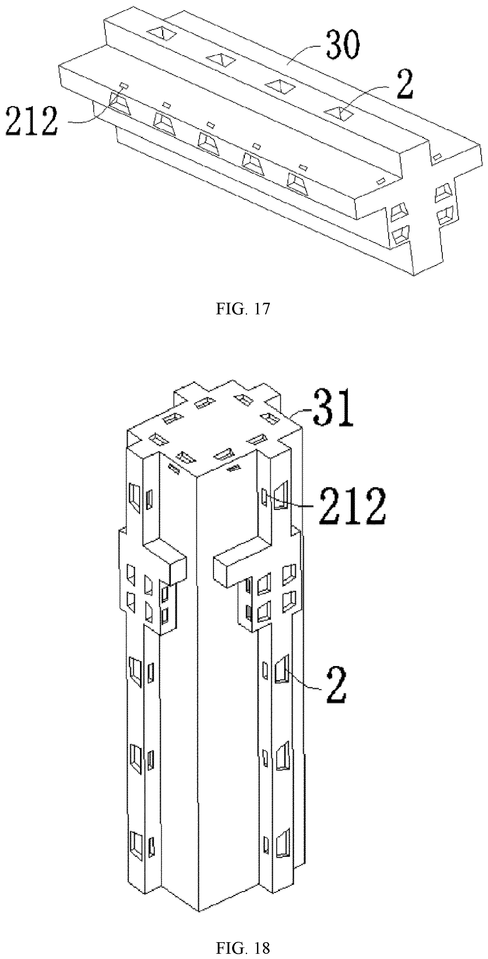

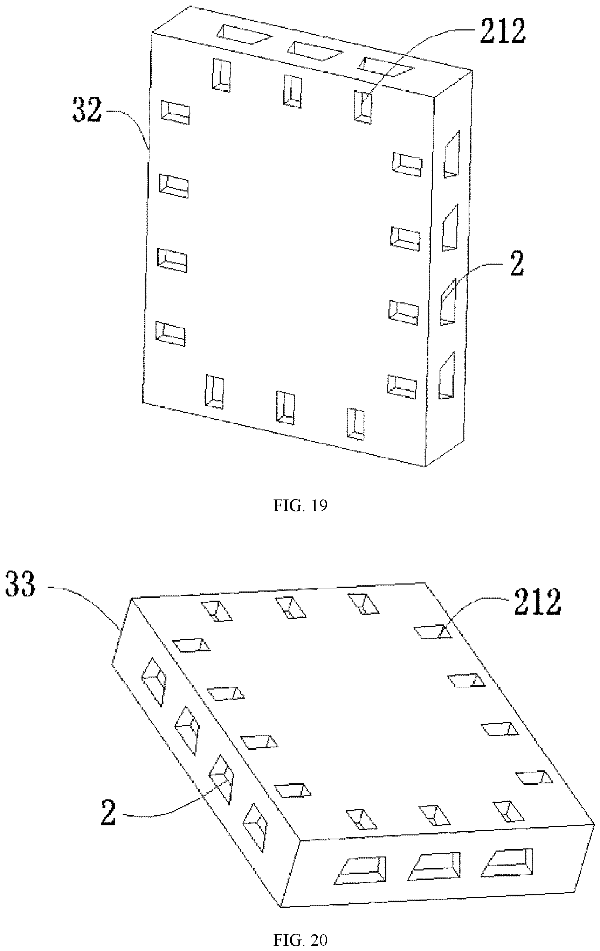

As shown in FIGS. 17-20, the prefabricated member 4 is the wing-shaped beam 30, the wing-shaped column 31, the prefabricated wall 32, the prefabricated floor slab 33 and a stair. A channel steel or a channel steel framework is disposed on the prefabricated member 4. The cavity 2 is located in the channel steel or connected to the channel steel framework. The locking member mounting preformed hole or fastener mounting preformed hole 212 is disposed at the outer side of the cavity 2 of the prefabricated member 4.

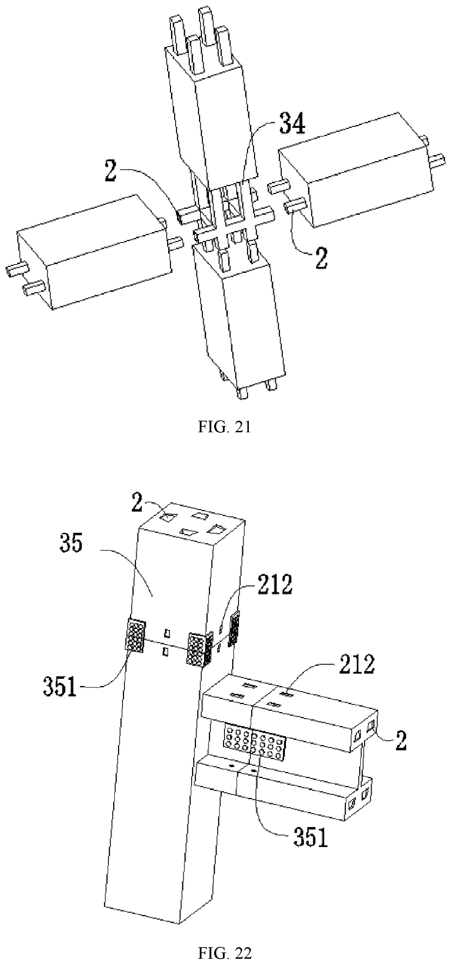

FIG. 21 shows an in-situ casting beam-column joint 34. The prefabricated member 4 is a laminated beam, a column, a shear wall, an external wall panel, an internal wall panel, a laminated floor slab, a balcony slab, a stair and others that are prefabricated by channel steel reinforced concrete. The assembled structure system of the present invention is employed for assembly and then the floor slab layer is casted in situ to make the building more firm.

FIG. 22 shows the steel framework structure 35 that is transversely or longitudinally assembled by taking the profile 5, channel steel or channel steel framework with the built-in cavity configuration 2 as the structure according to the present invention. The cavity configuration at the assembling end is provided with the mounting preformed hole 212. The profile 5, the channel steel or the channel steel framework is preferably a steel material or an aluminum alloy. The steel plate 351 and the bolt can be used for reinforcing or welded reinforcing the assembling connection portion after the assembling is completed using the assembled structure system of the present invention.

When the assembled structure system of the present invention is used for assembled buildings, the prefabricated member 4 with the cavity 2 is used for assembling connection with the fastener 1, and such an assembling manner has higher accuracy, faster speed and higher assembling efficiency. Grout filling can be further performed at the assembled connection portion after the assembling to strengthen the assembling. The fastener is a hinged surrounding body to improve the anti-seismic performance of the building. Since the fasteners are directly connected inside the prefabricated member and can be pre-placed in the cavity of the prefabricated member, the assembling and splicing can be performed by reserving a relatively small space for the connected members, and the construction and the decoration can be integrated for full assembly. In addition, the channel steel or the channel steel framework in the prefabricated member and the reinforced concrete can be integrally combined to bear the force together to make the entire building more firm. Moreover, the channel steel or the channel steel framework can directly build a formwork support to make the fabricating or in-situ casting working of the prefabricated member easier and more convenient, and also facilitate the manufacturing of irregular or special members.

In conclusion, as for the assembled structure system of the present invention, the assembly is easy, convenient, fast and firm, has high accuracy and improves the anti-seismic performance.

The above only describes the preferred embodiments of the present invention, but the scope of protection of the present invention is not limited thereto. Changes or replacements that may be easily envisaged by those skilled in the art within the technical scope disclosed by the present invention shall fall within the scope of protection of the claims.

## Claims

1. An assembled structure system, comprising a prefabricated member (4), a fastener (1) and a locking member (3), wherein
the prefabricated member (4) is provided with at least one cavity (2), and the fastener (1) is assembled in the at least one cavity (2);
at least one fastener (1) is assembled in each cavity of the at least one cavity (2);
the each cavity (2) comprises an upper end surface (21), a lower end surface (22), a left end surface (23) and a right end surface (24); wherein
the upper end surface (21) is provided with a fastener through hole (213) or a locking member through hole (211), wherein the fastener (1) passes through the fastener through hole (213), and the locking member (3) passes the locking member through hole (211);
each of the left end surface (23) and the right end surface (24) comprises a vertical surface (231) perpendicularly connected to the upper end surface (21) and an inclined surface (232) connected to the vertical surface (231); wherein
the inclined surface (232) of each of the left end surface (23) and the right end surface (24) is connected to the lower end surface (22);
the upper end surface (21) is located at an upper end or a lower end of the vertical surface (231), or located between the upper end and a lower end of the vertical surface (231); and
the fastener (1) comprises a fixed surface (11), two side surfaces (13, 14) and a bottom surface (12); wherein
the fixed surface (11) is provided with at least one locking hole or at least one through hole (111);
the bottom surface (12) is a curved surface, an arc surface, a fold line surface or a trapezoidal surface;
a total width of the bottom surface (12) is greater than or equal to a width of the fixed surface (11), and the total width of the bottom surface (12) is greater than or equal to a width of the lower end surface (22);
optionally, the bottom surface (12) is formed by two inclined bottom surfaces, wherein the two inclined bottom surfaces are folded inwardly;
a total width of the two inclined bottom surfaces is greater than or equal to the width of the fixed surface (11), and the total width of the two inclined bottom surfaces is greater than or equal to the width of the lower end surface (22);
a height of the fastener (1) is higher than a height of the inclined surface (232);
the fastener (1) has a flexibleness in connection portions between the fixed surface (11) and the two side surfaces (13, 14), and connection portions between the two side surfaces (13, 14) and the bottom surface (12);
optionally, the fixed surface (11) and the two side surfaces are hingedly connected, and the two side surfaces and the bottom surface (12) are hingedly connected and **characterized in that**
a connection angle between the vertical surface (231) and an outer side of the inclined surface (232) forms an obtuse angle (α).

2. The assembled structure system of claim 1, wherein the connection angle between the vertical surface (231) and the outer side of the inclined surface (232) is 120°-175°.

3. The assembled structure system of claim 1, wherein a block (15) is disposed on the bottom surface (12).

4. The assembled structure system of claim 1, wherein a fixed member (51) is disposed under the fixed surface (11), and the fixed member (51) is provided with at least one threaded hole (511); and the at least one threaded hole (511) is located under and corresponds to the at least one locking hole or the at least one through hole (111).

5. The assembled structure system of claim 4, wherein the fixed member (51) is an angle connector, and each of both end surfaces of the angle connector is provided with the at least one threaded hole (511).

6. The assembled structure system of claim 1, wherein the locking member (3) is a bolt or a screw.

7. The assembled structure system of claim 1, wherein the left end surface (23) and the right end surface (24) are symmetrical to each other, and the two side surfaces (13, 14) of the fastener (1) are symmetrical to each other.

8. The assembled structure system of claim 1, wherein the two inclined bottom surfaces are separated from or connected to each other.

9. A profile (5) having the assembled structure system of any one of claims 1 to 8.

10. The profile (5) of claim 9, wherein the profile (5) is applied to a furniture or industrial frameworks.

11. The profile (5) of claim 10, wherein the furniture comprises a cabinet, a wardrobe, a bookcase, a locker, a clapboard, a guardrail, a table, a chair, a door or a window.

12. A building or an appendage construction of the building having the assembled structure system of any one of claims 1 to 8.

13. The building or an appendage construction of the building of claim 12, wherein the building or the appendage construction of the building comprises a column, a beam, a shear wall, an external wall panel, an internal wall panel, a floor slab, a stair, a balcony slab, a bridge or a bridge pier.

14. The building or an appendage construction of the building of claim 12, wherein a channel steel or a channel steel framework is disposed in the prefabricated member (4); the at least one cavity (2) is located in the channel steel, or the at least one cavity (2) is connected to the channel steel framework.

15. The building or an appendage construction of the building of claim 12, wherein a locking member mounting preformed hole or a fastener mounting preformed hole (212) is disposed at an outer side of the at least one cavity (2) of the prefabricated member (4).

16. The building or an appendage construction of the building of claim 13, wherein the column is a wing-shaped column (31), and the beam is a wing-shaped beam (30).

## Patentansprüche

1. Montagestruktursystem, umfassend ein vorgefertigtes Element (4), ein Befestigungselement (1) und ein Arretierungselement (3), wobei
das vorgefertigte Element (4) mit wenigstens einem Hohlraum (2) versehen ist und das Befestigungselement (1) in dem wenigstens einen Hohlraum (2) montiert ist;
wenigstens ein Befestigungselement (1) in jedem Hohlraum des wenigstens einen Hohlraums (2) montiert ist;
jeder Hohlraum (2) eine obere Endfläche (21), eine untere Endfläche (22), eine linke Endfläche (23) und eine rechte Endfläche (24) umfasst; wobei
die obere Endfläche (21) mit einem Befestigungselementdurchgangsloch (213) oder einem Arretierungselementdurchgangsloch (211) versehen ist, wobei das Befestigungselement (1) durch das Befestigungselementdurchgangsloch (213) verläuft, und
das Arretierungselement (3) durch das Arretierungselementdurchgangsloch (211) verläuft;
wobei die linke Endfläche (23) und die rechte Endfläche (24) jeweils eine vertikale Fläche (231), die senkrecht mit der oberen Endfläche (21) verbunden ist, und eine schräge Fläche (232) umfassen, die mit der vertikalen Fläche (231) verbunden ist; wobei
die schräge Fläche (232) der linken Endfläche (23) und der rechten Endfläche (24) mit der unteren Endfläche (22) verbunden ist;
wobei die obere Endfläche (21) an einem oberen Ende oder einem unteren Ende der vertikalen Fläche (231) angeordnet ist oder zwischen dem oberen Ende und einem unteren Ende der vertikalen Fläche (231) angeordnet ist; und
das Befestigungselement (1) eine fixierte Fläche (11), zwei Seitenflächen (13, 14) und eine Bodenfläche (12) umfasst; wobei
die fixierte Fläche (11) mit wenigstens einem Arretierungsloch oder wenigstens einem Durchgangsloch (111) versehen ist;
die Bodenfläche (12) eine gekrümmte Fläche, eine Bogenfläche, eine Falzlinienfläche oder eine trapezförmige Fläche ist;
eine Gesamtbreite der Bodenfläche (12) größer oder gleich einer Breite der fixierten Fläche (11) ist und die Gesamtbreite der Bodenfläche (12) größer oder gleich einer Breite der unteren Endfläche (22) ist;
wobei die Bodenfläche (12) wahlweise durch zwei schräge Bodenflächen gebildet ist, wobei die zwei schrägen Bodenflächen einwärts geneigt sind;
eine Gesamtbreite der zwei schrägen Bodenflächen (12) größer oder gleich der Breite der fixierten Fläche (11) ist und die Gesamtbreite der zwei schrägen Bodenflächen (12) größer oder gleich der Breite der unteren Endfläche (22) ist;
eine Höhe des Befestigungselements (1) größer als eine Höhe der schrägen Fläche (232) ist;
das Befestigungselement (1) an Verbindungsstellen zwischen der fixierten Fläche (11) und den zwei Seitenflächen (13, 14) und Verbindungsstellen zwischen den zwei Seitenflächen (13, 14) und der Bodenfläche (12) Flexibilität aufweist;
wobei die fixierte Fläche (11) und die zwei Seitenflächen drehbar verbunden sind und die zwei Seitenflächen und die Bodenfläche (12) drehbar verbunden sind, und **dadurch gekennzeichnet, dass**
ein Verbindungswinkel zwischen der vertikalen Fläche (231) und einer Außenseite der schrägen Fläche (232) einen stumpfen Winkel (α) bildet.

2. Montagestruktursystem nach Anspruch 1, wobei der Verbindungswinkel zwischen der vertikalen Fläche (231) und der Außenseite der schrägen Fläche (232) 120°-175° beträgt.

3. Montagestruktursystem nach Anspruch 1, wobei ein Block (15) an der Bodenfläche (12) a ist.

4. Montagestruktursystem nach Anspruch 1, wobei ein fixiertes Element (51) unter der fixierten Fläche (11) a ist und das fixierte Element (51) mit wenigstens einem Gewindeloch (511) versehen ist; und das wenigstens eine Gewindeloch (511) unter dem wenigstens einen Arretierungsloch oder dem wenigstens einen Durchgangsloch (111) angeordnet ist und damit übereinstimmt.

5. Montagestruktursystem nach Anspruch 4, wobei das fixierte Element (51) ein Winkelverbinder ist und die beiden Endflächen des Winkelverbinders jeweils mit dem wenigstens einen Gewindeloch (511) versehen sind.

6. Montagestruktursystem nach Anspruch 1, wobei das Arretierungselement (3) ein Bolzen oder eine Schraube ist.

7. Montagestruktursystem nach Anspruch 1, wobei die linke Endfläche (23) und die rechte Endfläche (24) symmetrisch zueinander sind und die zwei Seitenflächen (13, 14) des Befestigungselements (1) symmetrisch zueinander sind.

8. Montagestruktursystem nach Anspruch 1, wobei die zwei schrägen Bodenflächen voneinander getrennt oder miteinander verbunden sind.

9. Profil (5), das die Montagestruktursystem nach einem der Ansprüche 1 bis 8 aufweist.

10. Profil (5) nach Anspruch 9, wobei das Profil (5) auf ein Möbelstück oder industrielle Rahmen angewandt wird.

11. Profil (5) nach Anspruch 10, wobei das Möbelstück einen Schrank, einen Garderobenschrank, ein Bücherregal, einen Spind, eine Schalung, ein Geländer, einen Tisch, einen Stuhl, eine Tür oder ein Fenster umfasst.

12. Gebäude oder Gebäudeanbau, das bzw. der die Montagestruktursystem nach einem der Ansprüche 1 bis 8 aufweist.

13. Gebäude oder Gebäudeanbau nach Anspruch 12, wobei das Gebäude oder der Gebäudeanbau eine Säule, einen Träger, einen Verbau, eine Außenwandverkleidung, eine Innenwandverkleidung, eine Bodenplatte, eine Stufe, eine Balkonplatte, eine Brücke oder einen Brückenkopf umfasst.

14. Gebäude oder Gebäudeanbau nach Anspruch 12, wobei ein U-Profil-Stahl oder ein U-Profil-Stahlrahmen in dem vorgefertigten Element (4) angeordnet ist; der wenigstens eine Hohlraum (2) in dem U-Profil-Stahl angeordnet ist oder der wenigstens eine Hohlraum (2) mit dem U-Profil-Stahlrahmen verbunden ist.

15. Gebäude oder Gebäudeanbau nach Anspruch 12, wobei ein vorgeformtes Arretierungselementmontageloch oder ein vorgeformtes Befestigungselementmontageloch (212) an einer Außenseite des wenigstens einen Hohlraums (2) des vorgefertigten Elements (4) angeordnet ist.

16. Gebäude oder Gebäudeanbau nach Anspruch 13, wobei die Säule eine flügelförmige Säule (31) ist und der Träger ein flügelförmiger Träger (30) ist.

## Revendications

1. Un système de structure assemblée, comprenant un élément préfabriqué (4), un fermoir (1) et un élément de verrouillage (3), dans lequel
l'élément préfabriqué (4) est muni d'au moins une cavité (2), et le fermoir (1) est assemblé dans la au moins une cavité (2) ;
au moins un fermoir (1) est assemblé dans chaque cavité de la au moins une cavité (2) ;
chaque cavité (2) comprend une surface terminale supérieure (21), une surface terminale inférieure (22), une surface terminale gauche (23) et une surface terminale droite (24) ; dans lesquelles
la surface terminale supérieure (21) est munie d'un trou traversant de fermoir (213) ou d'un trou traversant d'élément de verrouillage (211), dans lequel le fermoir (1) passe à travers le trou traversant de fermoir (213), et
l'élément de verrouillage (3) passe à travers le trou traversant d'élément de verrouillage (211) ; chacune des surfaces terminales gauches (23) et des surfaces terminales droites (24) comprend une surface verticale (231) perpendiculairement raccordée à la surface terminale supérieure (21) et une surface inclinée (232) raccordée à la surface verticale (231); dans lesquelles
la surface inclinée (232) de chacune des surfaces terminales gauches (23) et des surfaces terminales droites (24) est raccordée à une surface terminale inférieure (22);
la surface terminale supérieure (21) est située à une terminaison supérieure ou à une terminaison inférieure de la surface verticale (231), ou est située entre la terminaison supérieure et la terminaison inférieure de la surface verticale (231); et
le fermoir (1) comprend une surface fixe (11), deux surfaces latérales (13, 14) et une surface de fond (12); dans lequel
la surface fixe (11) est munie d'au moins un trou de verrouillage ou d'au moins un trou traversant (111);
la surface de fond (12) est une surface courbe, une surface en arc, une surface à ligne de pli ou une surface trapézoïdale ;
la largeur totale de la surface de fond (12) est supérieure ou égale à la largeur de la surface fixe (11), et la largeur totale de la surface de fond (12) est supérieure ou égale à la largeur de la surface terminale inférieure (22);
facultativement, la surface de fond (12) est formée par deux surfaces de fond inclinées, dans laquelle les deux surfaces de fond inclinées sont pliées vers l'intérieur;
la largeur totale des deux surfaces de fond inclinées est supérieure ou égale à la largeur de la surface fixe (11), et la largeur totale des deux surfaces de fond inclinées est supérieure ou égale à la largeur de la surface terminale inférieure (22);
la hauteur du fermoir (1) est supérieure à la hauteur de la surface inclinée (232);
le fermoir (1) est doté d'une souplesse dans les parties de raccordement entre les surface fixes (11) et les deux surfaces latérales (13, 14), et les parties de raccordement entre les deux surfaces latérales (13, 14) et la surface de fond (12);
facultativement, la surface fixe (11) et les deux surfaces latérales sont raccordées par charnières, et les deux surfaces latérales et la surface de fond (12) sont raccordées par charnières et **caractérisé en ce que**
le raccordement entre la surface verticale (231) et le côté externe de la surface inclinée (232) forme un angle obtus (α).

2. Un système de structure assemblée selon la revendication 1, dans lequel l'angle de raccordement entre la surface verticale (231) et le côté externe de la surface inclinée (232) est de 120°-175°.

3. Un système de structure assemblée selon la revendication 1, dans lequel un bloc (15) est placé sur la surface de fond (12).

4. Un système de structure assemblée selon la revendication 1, dans lequel un élément fixe (51) est placé sous la surface fixe (11), et l'élément fixe (51) est muni d'au moins un trou fileté (511); et le au moins un trou fileté (511) est situé sous et correspond au au moins un trou de verrouillage ou au au moins un trou traversant (111).

5. Un système de structure assemblée selon la revendication 4, dans lequel l'élément fixe (51) est un raccord angulaire, et chacune des deux surfaces terminales du raccord angulaire est munie d'au moins un trou fileté (511).

6. Un système de structure assemblée selon la revendication 1, dans lequel l'élément de verrouillage (3) est un boulon ou une vis.

7. Un système de structure assemblée selon la revendication 1, dans lequel la surface terminale gauche (23) et la surface terminale droite (24) sont mutuellement symétriques, et les deux surfaces latérales (13, 14) du fermoir (1) sont mutuellement symétriques.

8. Un système de structure assemblée selon la revendication 1, dans lequel les deux surfaces de fond inclinées sont mutuellement séparées ou raccordées.

9. Un profil (5) doté du système de structure assemblée de l'une quelconque des revendications 1 à 8.

10. Le profil (5) de la revendication 9, dans lequel le profil (5) est appliqué à des cadres de mobilier ou industriels.

11. Le profil (5) de la revendication 10, dans lequel le mobilier comprend une armoire, une penderie, une bibliothèque, un casier, une planche à clin, une rambarde, une table, une chaise, une porte ou une fenêtre.

12. Un bâtiment ou une construction attenante au bâtiment doté du système de structure assemblée de l'une quelconque des revendications 1 à 8.

13. Un bâtiment ou une construction attenante au bâtiment de la revendication 12, dans lequel le bâtiment ou la construction attenante au bâtiment comprend une colonne, une poutre, un mur de cisaillement, un panneau de mur externe, un panneau de mur interne, une dalle de sol, un escalier, une dalle de balcon, un pont ou une pile de pont.

14. Un bâtiment ou une construction attenante au bâtiment de la revendication 12, dans lequel un acier en U ou un cadre en acier en U est placé dans l'élément préfabriqué (4) ; la au moins une cavité (2) est située dans l'acier en U, ou la au moins une cavité (2) est raccordée au cadre en acier en U.

15. Un bâtiment ou une construction attenante au bâtiment de la revendication 12, dans lequel un trou préformé de montage d'élément de verrouillage ou un trou préformé de montage de fermoir (212) est placé à un côté externe de la au moins une cavité (2) de l'élément préfabriqué (4).

16. Un bâtiment ou une construction attenante au bâtiment de la revendication 13, dans lequel la colonne est une colonne en forme d'aile (31), et la poutre est une poutre en forme d'aile (30).
